# EUROPÄISCHE PATENTANMELDUNG

(11) **EP 3 837 966 A1**
(43) Veröffentlichungstag der Anmeldung: **23.06.2021**
(21) Anmeldenummer: 20216556.9
(22) Anmeldetag: 22.12.2020
(51) Int. Cl.: A01G 9/02, A01G 22/30

(54) **VERFAHREN ZUM AUFBRINGEN VON MOOS UND MOOSBEWACHSENE FLÄCHE**

(30) Priorität: 22.12.2019 DE 102019135653
(71) Anmelder: Fraunhofer-Gesellschaft zur Förderung der angewandten Forschung e.V., 80686 München (DE)
(72) Erfinder: Hofbauer, Wolfgang Karl, 83626 Valley (DE)

## Beschreibung

Die Erfindung betrifft ein Verfahren zum Aufbringen von Moos auf eine Fläche, bei dem das Moos mit einem zeitlich begrenzt wirkenden Klebstoff aufgebracht wird und eine mit diesem Verfahren bereitgestellte moosbewachsene Fläche.

Im Bereich der Gebäudebegrünung besteht zunehmend Interesse auch an vertikaler Begrünung. Dies liegt vor allem am hohen Interesse weiter Bevölkerungskreisen an einer Umgebung mit viel Grün einerseits und einer hohen Verdichtung in urbanen Bereichen andererseits. Bisherige wandgebundene Systeme sind jedoch in der Herstellung und im Betrieb aufwändig. Analog zu Dachbegrünungen besteht ein großes Interesse an extensiven Lösungen für Fassaden und Wände.

Bekannt ist ein Produkt der Firma Moosmatten Vertiko GmbH. Es besteht aus einem Wasserspeichervlies aus Polyacryl mit einem aufgenähten Filamentgelege aus Polyamidfäden, darin sind Moose eingebettet. Diese Anordnung gilt es auf die zu begrünende Fläche aufzubringen, bei einer vertikalen Fläche bedeutet dies eine Befestigung.

Unter der Bezeichnung Hydrosaat ist ein ingenieurbiologisches Verfahren zur schnellen Begrünung von Flächen bekannt. Dieses Verfahren findet Anwendung bei fehlendem Oberboden (bei der Rekultivierung), bei grobsteinigem Untergrund oder an durch Erosion gefährdeten Hängen zur schnellen Stabilisierung der Bodenoberflächen. Dabei werden Saatgut, Mulchstoffe, Dünger, Bodenhilfsstoffe und organischer Kleber mit Wasser vermischt. Diese Mischung wird mit einer Dickstoffpumpe auf die zu begrünenden Flächen aufgespritzt.

Aus der EP 0 504 089 B1 ist eine spezielle Form der Nassbegrünung unter Einsatz von Mutterboden, Pflanzensamen und anderen Bestandteilen, wie Schlacke, Portland-Zement, Steingeröll mit einer Korngröße unter 20 mm, kalkhaltige Zuschläge mit einer Korngröße zwischen 12 und 25 mm bekannt. Dabei wird erwähnt, dass dieses Verfahren für Hydrosaat geeignet ist. Es ermöglicht eine Schicht an einer vertikalen Fläche aufzubringen. Dabei haftet die Schicht an der vertikalen Fläche und ermöglicht Pflanzenwachstum.

Zu Versuchszwecken, vor allem um die Feinstaubreduktion durch Moose zu messen, wurden in der Stadt Stuttgart vertikale Flächen entlang einer Hauptstraße mit Matten, an denen Bodenmoose angebracht sind, ausgestattet. Diese Matten sind an den vertikalen Flächen befestigt.

Verschiedentlich kursiert eine Anleitung für ein sogenanntes "Moosgraffiti" bzw. einen Moosanstrich. Dabei soll beliebiges Moos gesammelt, grob zerkleinert und mit Joghurt versetzt werden. Aufgrund der Klebrigkeit des Joghurts wird eine gewisse Haftung am Untergrund erreicht, sodass die Mischung, aufgepinselt oder aufgespachtelt, eine Weile kleben bleibt. Das Moos stirbt in der Regel ab, oft bildet sich Schimmel und nach einer Weile wittert die Masse meist wieder von der Unterlage ab - es wird in der Regel also keine dauerhafte Ansiedlung von Moos erreicht. Entsprechend wurde im Prüfungsverfahren zur prioritätsbegründenden Anmeldung im Internet die Anleitung "Her mit dem Moos" gefunden.

Bei diversen Kollagen werden Moos, Flechten oder ähnlich strukturiertes Material auf einen Träger aufgeklebt und oft zusätzlich koloriert (die Pflanzen sind abgestorben). Derartige Produkte sind bei unterschiedlichen Herstellern erhältlich.

Aus der EP 2 929 777 A1 ist ein Verfahren bekannt, bei dem ein Träger bereitgestellt wird, zumindest eine der Oberflächen des Trägers mit einem Klebstoff behandelt wird, ein Beschichtungsmaterial auf die mit dem Klebstoff behandelte Oberfläche des Trägers aufgebracht wird und eine Beschichtung auf dem Träger fertiggestellt wird, die den Klebstoff und zumindest ein Beschichtungsmaterial aufweist, wobei das Beschichtungsmaterial zumindest ein natürliches und/oder ein künstliches Material enthält.

Aufgabe der Erfindung ist es ein einfaches Verfahren zur Begründung vertikaler Flächen bereitzustellen sowie eine damit begrünte Fläche.

### Lösungsweg

Erfindungsgemäß ist ein Verfahren zum Aufbringen von Moos auf eine Fläche vorgesehen, wobei das Moos mit einem zeitlich begrenzt wirkenden Klebstoff auf die Fläche geklebt wird. Dabei werden Moos, Fläche und Klebstoff derart ausgewählt, dass das aufgeklebte Moos an der Fläche anwächst. Durch das Anwachsen des Mooses an der Fläche erfolgt eine Befestigung des Mooses an der Fläche, welche die zeitlich abnehmende Wirkung des Klebstoffs ausgleicht.

Es ist bedeutend, dass ein zeitlich begrenzt wirkender Kleber gewählt wird. Der Kleber ist zwar zunächst wichtig, damit das Moos an der Fläche klebt. Allerdings behindert der Kleber das Wachstum des Mooses. Diese Behinderung ist im Wesentlichen mechanisch bedingt, da der Kleber nicht nur bewirkt, dass das Moos an der Fläche klebt, sondern auch, dass die einzelnen Bestandteile des Mooses aneinanderkleben. Beim Wachsen des Mooses müssen die Bestandteile des Mooses sich aber voneinander lösen. Daher sollte zur Verbesserung des Wachstums die Wirkung des Klebstoffs nachlassen. Da das Moos mit der Zeit ohnehin an der Fläche anwächst, erfolgt dadurch eine Befestigung des Mooses, welche die zeitlich abnehmende Wirkung des Klebstoffs ausgleicht.

Je nach verwendetem Klebstoff verflüchtigt sich der Klebstoff weitgehend. Dies ist ein Mechanismus, der dazu führt, dass die Wirkung des Klebstoffs nachlässt. Unter einer nachlassenden Wirkung des Klebstoffs ist also vor allem gemeint, dass weniger Klebstoff im Moos und an der Fläche vorhanden ist. Dies schließt aber nicht aus, dass ein Klebstoff gewählt wird, der sich nicht verflüchtigt oder anderweitig vom Moos und von der Fläche verschwindet, sondern durch eine chemische Änderung seine Wirkung nachlässt. Auch beide Mechanismen zusammen sind denkbar; wichtig ist, dass die Verklebung der Moosbestandteile untereinander nachlässt.

Gerade bei einem sich verflüchtigenden Klebstoff wird vielfach auch von einem wiederlösbaren Klebstoff gesprochen.

Gemäß der eingangs erwähnten im Internet gefundenen Anleitung "Her mit dem Moos" wird Moos in eine Joghurt-Lösung gerührt und auf eine Fläche aufgebracht. Es ist nicht von der Hand zu weisen, dass die Joghurt-Lösung eine gewisse klebende Wirkung hat. Noch viel weniger kann in Frage gestellt werden, dass die Wirkung zeitlich begrenz ist.

Generell sollte aber unter einem Klebstoff eine Substanz verstanden werden, die ein Fachmann - von Notfällen abgesehen - ernsthaft in Erwägung ziehen würde, um zu kleben. Kein Fachmann würde Joghurt oder Honig in Erwägung ziehen um zu kleben.

Wie bereits erwähnt hat die Auswahl der geeigneten Moosarten große Bedeutung. Es sollen für den jeweiligen Anwendungsfall jeweils die am besten geeigneten, nach Möglichkeit heimischen, Moosarten ausgewählt werden. Für mineralische, Zement oder Kalk gebundenen Untergründe eigenen sich besonders gut Moosarten, die bekannt dafür sind, dass sie an entsprechenden Untergründen natürlich vorkommen, wie, z.B. Tortula muralis, Orthotrichum diaphanum, Schistidium spp., Bryum argenteum, Ceratodon purpureus, Tortella toruosa, Grimmia spp., Bryum capillare s.l., Homalothecium sericeum, Homalothecium lutescens, Funaria hygrometrica.

Zur Nomenklatur dieser und folgender Aufzählung von Arten siehe Hill, M.O., Bell, N., Bruggeman-Nannenga, M.A., Brugués, M., Cano, M.J., Enroth, J., Flatberg, K.I., Frahm, J.-P., Gallego, M.T., Garilleti, R., Guerra, J., Hedenäs, L., Holyoak, D.T., Hyvönen, J., Ignatov, M.S., Lara, F., Mazimpaka, V., Muñoz, J. & Söderström, L. (2006): An annotated checklist of the mosses of Europe and Macaronesia. Journal of Bryology 28: 198-267.

In einer Ausführungsform wird eine Fläche mit einer hinreichenden Rauheit und/oder Porosität gewählt. Die hinreichende Porosität ist im Regelfall bei einer Grüße der Poren oder Spalten oder Leisten von mindestens 0,01 mmm bis ca. 2 mm gewährleistet. An raueren und/oder poröseren Flächen kann das Moos mechanisch besser angeklebt werden. Daher genügt weniger Kleber oder ein weniger starker Kleber. Auch wenn Moos viele Kleber erstaunlich gut aushält, also kaum eine Schädigung erfolgt, so sind natürlich in den meisten Klebstoffen Schadstoffe enthalten, die neben der beschriebenen mechanischen Wirkung eine gewisse Schädigung des Mooses - und bei entsprechend großen Flächen potentiell auch der Umgebung - bewirken. Daher ist es vorteilhaft, wenn durch eine geeignete Fläche die Wirkung des Klebstoffs unterstützt wird, so dass weniger Klebstoff benötigt wird, auch wenn die Schäden durch den Klebstoff -jedenfalls bei Auswahl eines geeigneten Klebstoffs - insgesamt gering sind.

In einer Ausführungsform wird die hinreichende Rauheit und/oder Porosität durch eine Behandlung der Fläche erreicht. Zum Aufrauen kann eine handelsübliche Ätzpaste aufgetragen werden, muss aber nach Einwirken wieder gründlich abgespült werden. Dieses Vorgehen empfiehlt sich besonders bei harten, vertikal aufzustellenden oder aufgestellten Betonoberflächen. In manchen Fällen, also bei einem besonders glatten und harten Untergrund, kann auch ein mechanisches Aufrauen der Oberfläche sinnvoll sein.

Um das Öffnen der Poren zu verstehen, ist folgender Gesichtspunkt wichtig. Die Oberfläche etwa von Porenbeton ist häufig weitgehend glatt, während unmittelbar unter der Oberfläche Poren liegen. Wird nun, etwa durch die Ätzpaste, ein wenig Beton abgetragen, öffnen sich die Poren.

Selbstverständlich kann das Aufrauen und/oder das Öffnen der Poren auch durch mechanische Einwirkung erfolgen.

Es versteht sich, dass es natürlich am günstigsten ist, eine Fläche zu wählen, die bereits die gewünschte Rauheit oder Porosität aufweist. Etwa bei der nachträglichen Begrünung einer Gebäudewand hat man aber keine Wahl. Auch kann es Anwendungsfälle geben, bei denen ein Material zum Einsatz kommen soll, welches im Normalfall nicht rau und/oder porös ist.

Neben der klassischen Rauheit oder Porosität kommen auch andere Strukturen in Betracht, also etwa Leisten, Spalten oder Vergleichbares.

In einer Ausführungsform wird als Klebstoff Sprühkleber verwendet. Beispielweise hat sich das Produkt "3M Spray Mount" bewährt. Es kommt aber nicht auf das genaue Produkt an.

Es ist auch möglich den Sprühkleber mehrfach aufzubringen, etwa auch auf das bereits auf die Fläche aufgeklebte Moos. In den ersten Tagen kann die Wirkung des Klebstoffs stärker nachlassen ohne dass dies in der oben geschilderte Weise bereits durch das Anwachsen des Mooses an der Fläche ausgeglichen wird. In diesem Fall kann es sinnvoll sein, das Moos nochmals zu besprühen. Es versteht sich, dass es nicht auf den Klebstoff ankommt, der sich außen, also an der der Fläche abgewandten Seite des Mooses, niederschlägt, sondern auf den Klebstoff, der so weit zur Fläche dringt, dass er dazu beiträgt, dass das Moos auf die Fläche geklebt wird.

In einer Ausführungsform wird zunächst die Fläche mit Klebstoff versehen und anschließend auf die mit Klebstoff versehene Fläche das Moos aufgebracht. Dieses Vorgehen hat sich bewährt, da Kleber leichter auf die Fläche als auf das Moos aufgebracht werden kann. Zudem wird so erreicht, dass der Klebstoff sich vor allem dort befindet, wo er zum Kleben des Mooses an die Fläche notwendig ist.

Beim prinzipiell auch möglichen Aufbringen des Klebstoffs auf das Moos besteht die Gefahr, dass der Klebstoff in das Moos eindringt, während es zum Kleben des Mooses an die Fläche grundsätzlich nur auf den Klebstoff ankommt, der an der Grenze von Moos und Fläche angeordnet ist.

In einer Ausführungsform wird das Moos in Form von Moosfragmenten aufgebracht, wobei die Moosfragmente insbesondere aufgestreut und/oder aufgeblasen werden. Zum Aufblasen sind im Regel technische Hilfsmittel erforderlich, wenngleich es auch denkbar ist, die Moosfragmente etwa auf die Handfläche zu legen und durch kräftiges Pusten auf die Fläche zu blasen. Es versteht sich, dass dies weniger exakt ist, aber einfach und in vielen Fällen völlig ausreichend.

Wenn es sich um eine horizontale Fläche oder eine leicht geneigte Fläche handeln sollte, ist - außer etwa bei Wind - das Aufstreuen unproblematisch. Bei einer vertikalen Fläche gestaltet sich das Aufstreuen schwieriger. Es ist erforderlich dafür zu sorgen, dass die Moosfragmente tatsächlich an der Fläche kleben. Daher wird vielfach das Aufstreuen mit einem leichten Andrücken verbunden sein.

An dieser Stelle soll erwähnt werden, dass der Hauptanwendungsfall vertikale Flächen oder stark geneigte Flächen sind. Bei horizontalen Flächen oder schwach geneigten Flächen ist das Verfahren zwar selbstverständlich auch geeignet, aber zumeist nicht erforderlich, da das Moos meist nicht auf die Fläche geklebt werden muss, sondern vielfach einfach aufgelegt werden kann.

Es ist je nach Anwendung auch möglich, das Moos zunächst auf eine horizontale oder leicht geneigte Fläche aufzukleben und die Fläche erst später in die gewünschte Orientierung zu bringen. Selbstverständlich ist dies vielfach nicht möglich. Wenn etwa das Moos auf die Wand eines Gebäudes direkt aufgebracht werden soll, dann kann ersichtlich nicht die Orientierung der Wand des Gebäudes geändert werden.

Beansprucht wird auch eine Fläche mit Moos, bei der das Moos mit dem oben geschilderte Verfahren aufgebracht ist. Zur Vermeidung von Wiederholungen wird auf die Erläuterungen zum Verfahren verwiesen.

### Ausführungsbeispiel

Anhand von Figuren wird die Erfindung nachfolgend detaillierter beschrieben. Dabei zeigen schematisch
Figur 1 eine Baustoffplatte, mit an den gekennzeichneten Flächen aufgetragenem Klebstoff
Figur 2 die Baustoffplatte gemäß Figur 1 mit angeklebten Moosfragmenten an den gekennzeichneten Stellen.

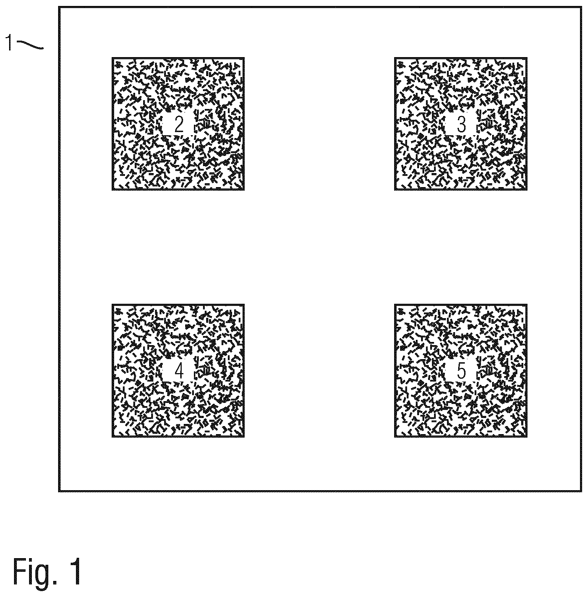

In Figur 1 ist eine Baustoffplatte 1, eine handelsübliche Kalksandsteinplatte, gezeigt mit vier gekennzeichneten Bereichen 2, 3, 4 und 5. Diese Bereiche werden mit Klebstoff besprüht. Als Klebstoff dient der unter dem Markennamen 3M Spray Mount vertriebene Spühkleber. Die genaue Zusammensetzung und die Eigenschaften gehen aus dem Sicherheitsdatenblatt mit der Dokumentnummer 27-7264-8, überarbeitet am 13.09.2019, Version 3.05 hervor, in dem als Produktidentifikator 3M(TM) SprayMount(TM) Sprühkleber - repositionierbar und wiederlösbar (Aerosol; PL-7874) angegeben ist.

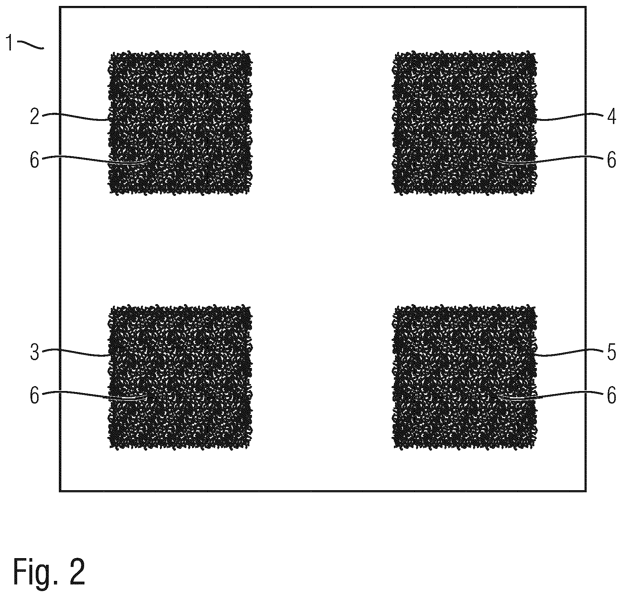

Anschließend wurden Moosfragmente des Mooses Homalothecium sericeum in den Bereichen 2, 3, 4 und 5 aufgestreut. Wie in Figur 2 gezeigt, ist in den Bereichen 2, 3, 4 und 5 Moos 6 angewachsen. Wenngleich aus der Figur 2 nicht zu erkennen, ist bei fachlicher Analyse klar, dass die Wirkung des Klebstoffs nachgelassen hat. Das Moos ist also nicht mehr durch die Wirkung des Klebstoffs, sondern durch das Anwachsen des Mooses an der Baustoffplatte 1 gehalten.

## Patentansprüche

1. Verfahren zum Aufbringen von Moos (6) auf eine Fläche (1),
wobei das Moos (6) mit einem zeitlich begrenzt wirkenden Klebstoff auf die Fläche (1) geklebt wird,
wobei Moos (6), Fläche (1) und Klebstoff derart ausgewählt werden, dass das aufgeklebte Moos (6) an der Fläche (1) anwächst,
wobei durch das Anwachsen des Mooses (6) an der Fläche (1) eine Befestigung des Mooses (6) an der Fläche (1) erfolgt, welche die zeitlich abnehmende Wirkung des Klebstoffs ausgleicht.

2. Verfahren nach Anspruch 1, **dadurch gekennzeichnet, dass** eine Fläche (1) mit einer hinreichenden Rauheit und/oder Porosität gewählt wird.

3. Verfahren nach einem der vorhergehenden Ansprüche, **dadurch gekennzeichnet, dass** die hinreichende Rauheit und/oder Porosität durch eine Behandlung der Fläche (1) erreicht wird.

4. Verfahren nach einem der vorhergehenden Ansprüche, **dadurch gekennzeichnet, dass** als Klebstoff Sprühkleber verwendet wird.

5. Verfahren nach einem der vorhergehenden Ansprüche, **dadurch gekennzeichnet, dass** zunächst die Fläche (1) mit Klebstoff versehen wird, und anschließend auf die mit Klebstoff versehene Fläche (1) das Moos (6) aufgebracht wird.

6. Verfahren nach einem der vorhergehenden Ansprüche, **dadurch gekennzeichnet, dass** das Moos (6) in Form von Moosfragmenten aufgebracht wird, wobei die Moosfragmente insbesondere aufgestreut und/oder aufgeblasen werden.

7. Fläche (1) mit Moos (6), **dadurch gekennzeichnet, dass** das Moos (6) nach einem der vorhergehenden Ansprüche aufgebracht ist.
